# EUROPEAN PATENT APPLICATION

(11) **EP 2 092 864 A2**
(43) Date of publication of application: **26.08.2009**
(21) Application number: 09152729.1
(22) Date of filing: 12.02.2009
(51) Int. Cl.: A47J 37/04

(54) **Oven cooking device, specially for the preparation of kebabs**

(30) Priority: 13.02.2008 IT BS20080033
(71) Applicant: A.S.G. International S.r.l., 25122 Brescia (IT)
(72) Inventor: Ghisla, Lucio, I-25080, Moniga del Garda, BRESCIA (IT)
(74) Representative: Pulieri, Gianluca Antonio

(57) **Abstract**

A cooking device (1) specifically, but not just, for making kebabs, comprising a cooking group (20) comprising a take-off shaft (24) rotating around the horizontal rotation axis (X) of the power take-off and a stem (22) connected to the take-off shaft (24) to be driven in rotation around a vertical rotation axis (Z), perpendicular to the horizontal rotation axis (X). The device also comprises a transmission holder box (26), an oven tray (40), a lower flange (50) and specifically for making, but not only, shish kebabs, an upper flange (70) and skewers (80).

## Description

The present invention relates to an oven cooking device, specially for making kebabs.

As is known, some methods of cooking food are typical of some regions only and practically unknown in others.

However, the cultural exchange which has taken place in the last decades and which continues today, has made it possible to disseminate some deep-rooted cooking traditions circumscribed within one region to other regions too.

Often, such cooking methods require specific instruments not always available in a traditional market.

In addition, migratory phenomena have led to multitudes of people of Asian or African origin living in Europe or the United States; such people, wishing to maintain some of the culinary traditions typical of their country of origin are attentive to the presence on the market of cooking instruments, adapted to the customs and means available in the host countries, suitable for performing the methods of cooking traditional in their countries of origin.

The kebab especially, a meat-based dish typical of Turkish, Persian and Arab cuisine has become particularly widespread.

Generally speaking, there are two types of kebab, the "doner kebab" in which a piece of meat rotates on a vertical roasting spit, and the "shish kebab", in which a number of skewers of meat surround a vertical roasting spit.

The purpose of the present invention is to make an oven cooking device suitable for making kebabs.

Such purpose is achieved by a cooking device made according to claim 1 below. The dependent claims describe embodiment variations.

The characteristics and advantages of the cooking device according to the present invention will be evident from the description given below made by way of a non-limiting example, according to the following figures, wherein:

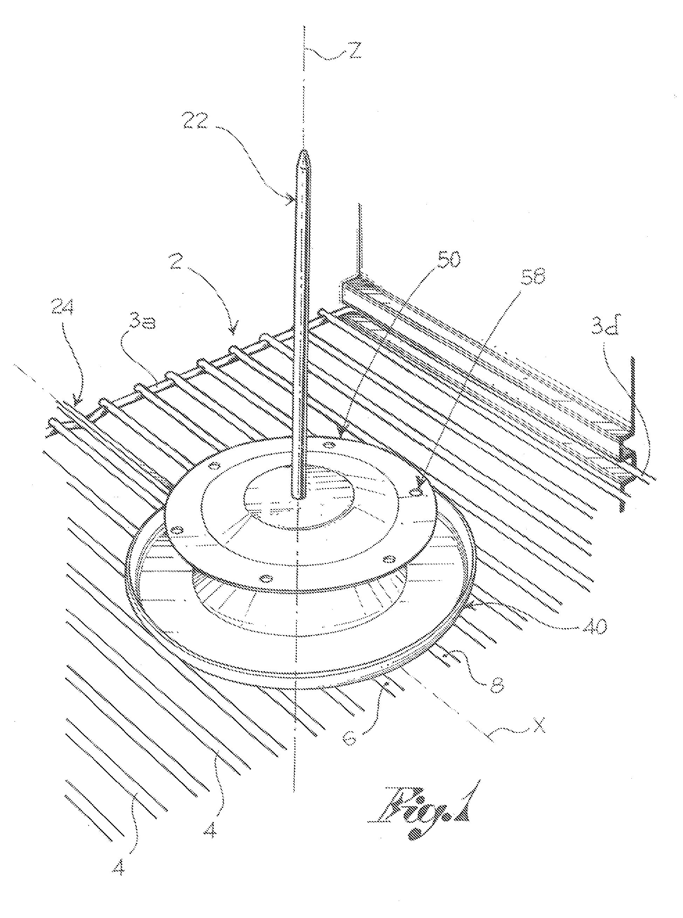

- figure 1 shows an oven cooking device, according to a first embodiment of the present invention, suitable for making a doner kebab;

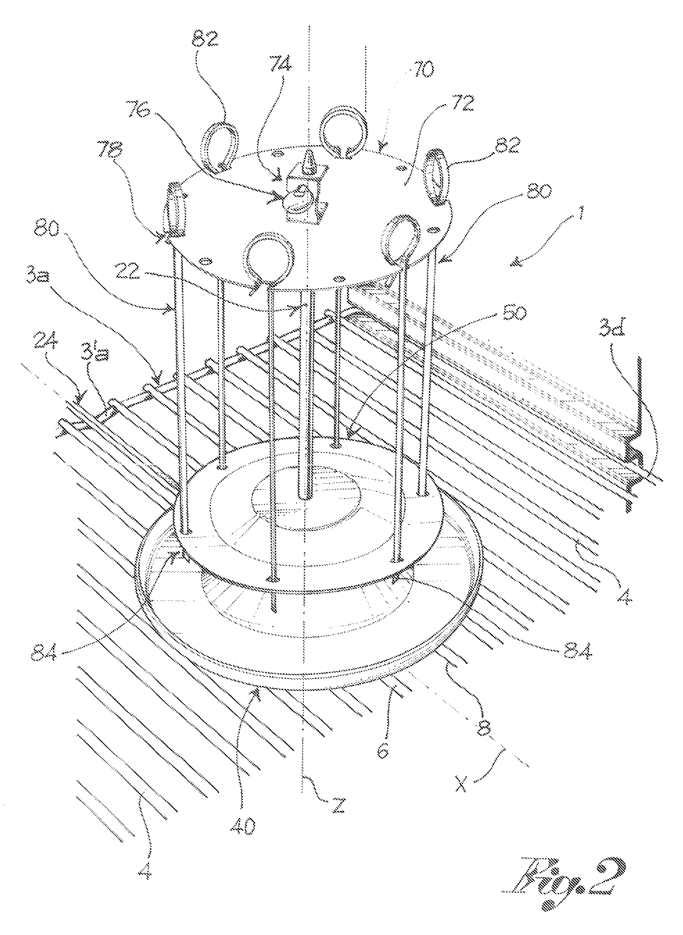

- figure 2 shows the oven cooking device according to a further embodiment, suitable for making a shish kebab;

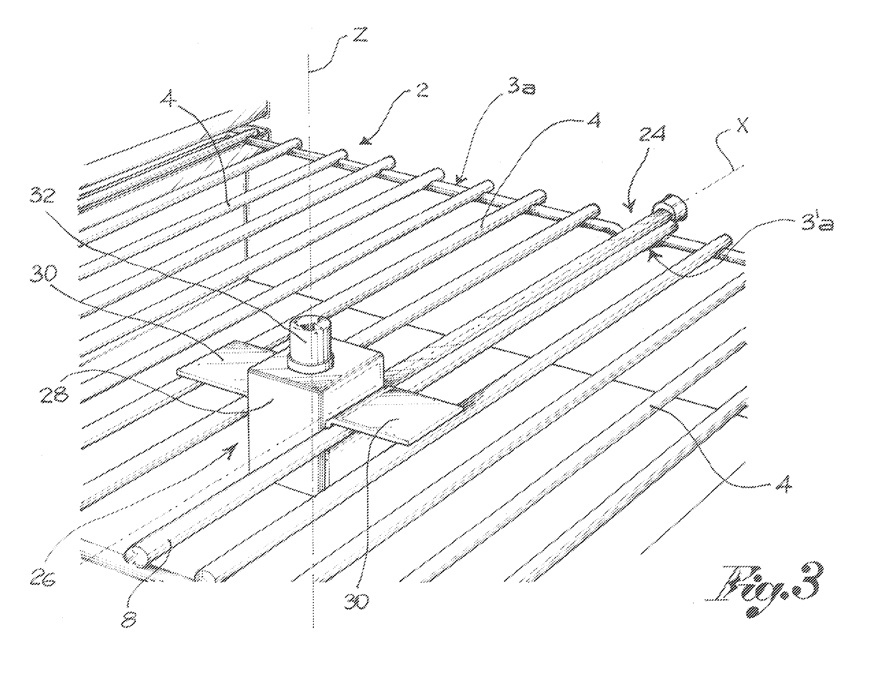

- figure 3 shows a shelf with a transmission holder box of the device in figures 1 and 2;

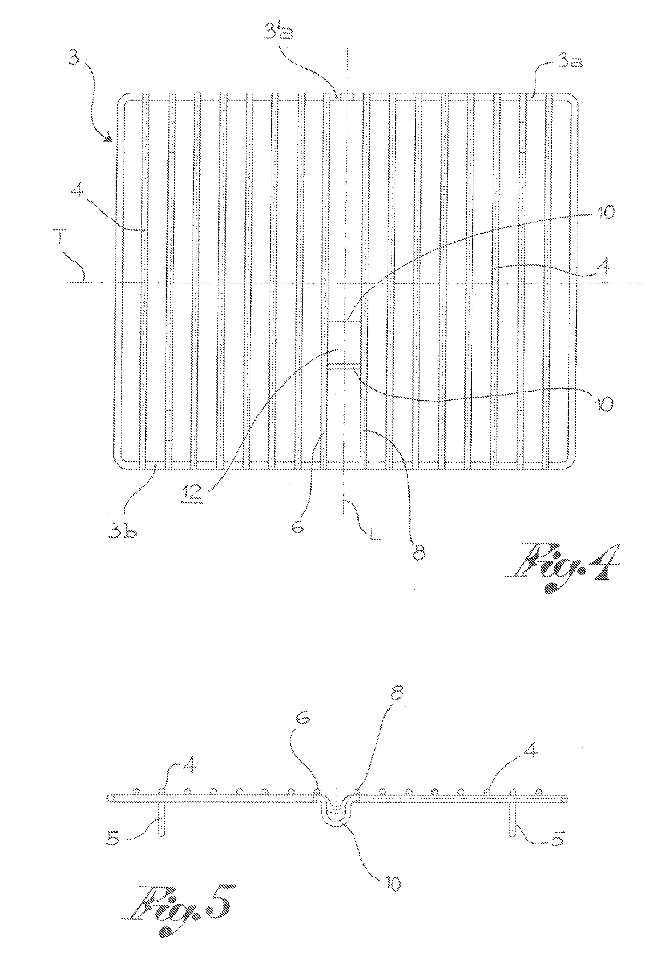

- figures 4 and 5 respectively show a view from above and a lateral view of the shelf in figure 3;

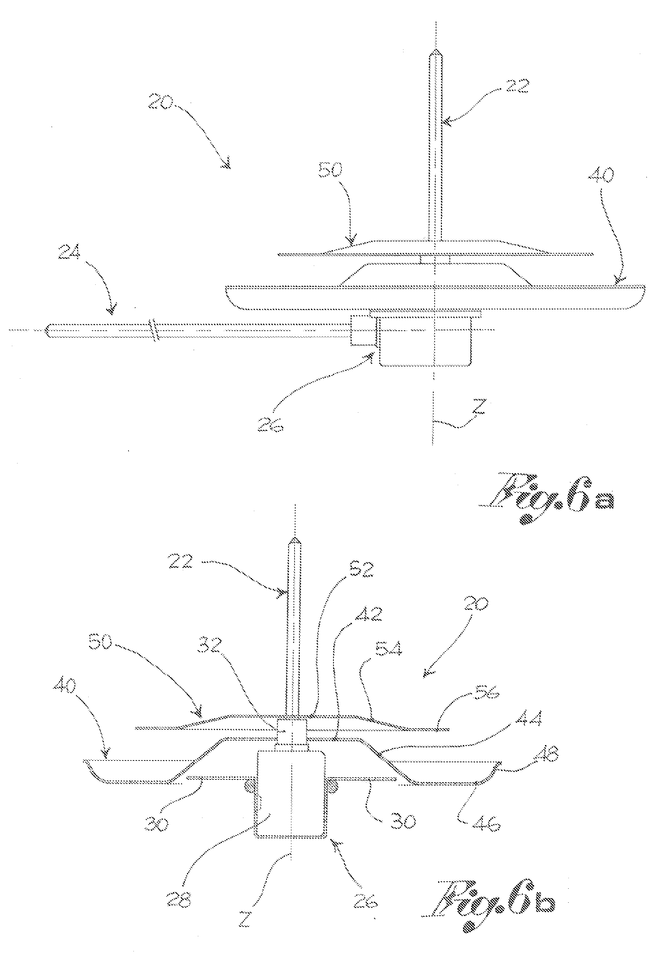

- figures 6a and 6b show lateral views of a cooking unit of the devices in figures 1 and 2.

With reference to the attached figures, reference numeral 1 globally denotes an oven cooking device, specially for making kebabs.

The device 1 is suitable for accommodating entirely inside the cooking chamber of an oven, defined by a door which opens, by lateral walls, by a rear wall, by a bottom and by a top.

The device 1 comprises a shelf 2 suitable for being supported by channels made in the sides of the cooking chamber, at a predefined height from the bottom.

The oven has an electric motor which provides a mechanical torque at a power take-off, generally positioned on one of the walls defining the cooking chamber. The power take-off is able to transmit a rotation along a horizontal rotation axis X, parallel to the bottom of the cooking chamber and perpendicular to the wall which the power take-off is positioned on.

For clarity of explanation, hereinafter in the description it will be assumed that the power take-off is positioned on the rear wall of the cooking chamber and the horizontal rotation axis X is therefore perpendicular to said wall.

The shelf 2 comprises a rectangular or square frame 3, which extends in length along a longitudinal axis L, parallel to the horizontal rotation axis X when the shelf is in the cooking chamber, and in width along a transversal axis T, perpendicular to the longitudinal axis L.

The frame 3 is formed of transversal rods 3a, 3b spaced along the longitudinal axis L, and longitudinal rods 3d, spaced along the transversal axis T.

Preferably, the transversal rod 3a proximal to the rear wall of the cooking chamber of the oven when the shelf is inserted in said chamber, has a section 3a' curved towards the lower side of the shelf 2.

The shelf 2 also comprises a number of wires 4, parallel to the longitudinal axis L, spaced along the transversal axis T.

The shelf 2 has an upper side and a lower side.

On the lower side the shelf has a number of supports 5, for instance in the form of wires bent into a U-shape, each support being attached to a wire of the shelf, for instance, welded. For example, four supports are provided, two on one wire and two on another.

Between said wires 4 of the shelf 2, there are two primary wires 6, 8, spaced so that when the shelf is put into the oven, the horizontal rotation axis X is positioned between them.

Preferably, the primary wires 6, 8 are spaced at a different distance to the distance between the other wires of the shelf.

The curved section 3a' of the longitudinal rod 3a of the shelf 2 is positioned between said primary wires 6, 8 of the shelf 2.

Preferably, in addition, the shelf 2 comprises at least one stop 10, positioned between the primary wires 6, 8; for instance, the stop 10 is composed of a wire shaped into a U, which joins the two primary wires 6, 8.

According to a preferred embodiment, the height of the stop 10 is lower than the height of the supports 5, so that when the shelf 2 is placed on a flat surface it rests firmly on the supports 5 and the stops 10 do not interfere with them.

Preferably, the shelf 2 comprises two stops 10, spaced along the longitudinal axis L.

The two primary wires 6, 8 and the two stops 10 define between them a housing compartment 12.

The device 1 also comprises a cooking group 20 suitable for laying on the shelf 2 in a removable manner, connecting with the power take-off of the motor and supporting the meat to be cooked.

Specifically, the cooking group 20 is able to connect to the power take-off and to transform the rotation around the horizontal rotation axis X into a rotation around a vertical rotation axis Z, perpendicular to the horizontal rotation axis X.

This way, the piece of meat to be cooked can be speared so as to make it rotate vertically for making kebabs.

The cooking group 20 comprises means of transmission able to take the rotatory movement along a horizontal rotation axis from the power take-off and transform it into rotatory movement along said vertical rotation axis.

The means of transmission comprise a stem 22, extending mainly along the vertical rotation axis Z, preferably pointed so as to spear the piece of meat, a take-off shaft 24, perpendicular to the stem 22, and a transmission holder box 26, where the stem and the take-off shaft converge.

Preferably, the cross-section of the stem 22, made on a plane perpendicular to the vertical rotation axis, is polygonal, for instance square or rectangular; according to another embodiment, said cross-section is circular.

In addition, the means of transmission comprise a system of transmission gears, housed in the transmission holder box 26, connected to the stem 22 and to the take-off shaft 24, to transfer the rotatory movement from the shaft to the stem.

The cooking group 20 may be positioned on the shelf 2; specifically the transmission holder box 26 is lodged in the housing compartment 12 of the shelf, so that the take-off shaft 24 is aligned with the horizontal rotation axis X.

Said take-off shaft 24 extends along said horizontal rotation axis X so as to enable mechanical connection with the power take-off of the motor.

Specifically, the take-off shaft 24, near its extremity connecting to the power take-off, rests on the curved section 3a' of the transversal rod 3a of the shelf 2, for better support.

The transmission holder box 26 may be lodged between the primary wires 6, 8, so as to protrude from the lower side of the shelf 2. Advantageously this makes it possible to reduce the vertical dimensions of the cooking device, preventing problems of space.

Specifically, the transmission box 26 comprises a main body 28, which the transmission gears are lodged in and which is positioned between the primary wires 6, 8 of the shelf, and a pair of support wings 30, protruding from the main body 28, along the transversal axis T of the shelf.

Said support wings 30 rest on the wires of the shelf 2, forming a stable support of the transmission devices, acting against the rotation of the cooking group driven by the motor.

Furthermore, when the transmission box is inserted on the shelf in the housing compartment 12, the main body is near, almost against, the stops 10 of the shelf.

Advantageously, such stops also increase the stability of the cooking group on the shelf.

This way, the support wings 30 prevent the cooking group 20 from overturning in relation to the horizontal rotation axis X; in the meantime, the stops 10, hitting against the main body of the transmission box, prevent the cooking group from overturning in relation to the transversal axis T of the shelf.

The transmission box 26 comprises, in addition, a spacer 32, which surmounts the main body 28, at the foot of the stem 22.

Furthermore, according to a preferred embodiment, the cooking group 20 comprises an oven tray 40, for instance in the shape of a dish, fitted onto the stem 22 in a detachable manner.

Preferably, the oven tray 40 is fitted onto the spacer 32 of the transmission box 26.

When the cooking group 20 is inserted on the shelf 2, the oven tray 40 rests on the wires of the shelf.

According to one embodiment variation, the oven tray 40 rests on the transmission holder box 26, remaining raised in relation to the wires of the shelf.

According to a preferred embodiment, the oven tray 40 comprises, from the vertical rotation axis Z towards the peripheral rim, a connection plate 42, an annular flared portion 44, flared downwards, and an annular collection portion 46, with a raised edge 48.

Advantageously, the flared portion 44 allows the liquids generated during cooking of the meat to drain off into the collection portion 46, acting as a collection tank, by virtue of the raised edge 48.

According to one preferred embodiment, the cooking group 20 comprises in addition a lower flange 50, in the form of a dish, fitted onto the stem 22 in a detachable manner, above the oven tray 40.

The lower flange 50 acts as a support for the meat speared by the stem 22 or, as will be described below, as a support for the skewers for a shish kebab.

Preferably, the lower flange 50 is vertically spaced from the oven tray 40, in that it rests on the spacer 32 of the transmission holder box 26.

Preferably, in addition, the lower flange comprises, from the vertical rotation axis Z towards the peripheral rim, a central plate 52, a flared crown 54 and a flat crown 56.

Preferably, the lower flange 50 extends radially so that the peripheral rim is inside the peripheral rim of the oven tray below, and specifically so that the flat crown 56 terminates with its peripheral rim in correspondence with the collection portion 46 of the oven tray below 40.

According to a preferred embodiment, the lower flange 50 comprises a number of holes 58, which surround the vertical rotation axis Z.

Preferably, the holes 58 are positioned along an imaginary circumference concentric to the vertical rotation axis Z, for instance on the flat crown 56 of the lower flange 50.

Furthermore, the cooking group 20 comprises accessories for completing the cooking of a shish kebab.

Said completion accessories comprise an upper flange 70, in the form of a plate, fitted onto the stem in a detachable manner 22 and attached to this in an adjustable manner so as to maintain the desired height from the lower flange underneath 50.

The upper flange 70 comprises a flat plate 72 and an attachment support 74, for instance in the form of a U-shaped profile, attached to the plate 72 so as to be traversed by the stem 22.

The upper flange 70 comprises in addition a key 76, which can be screwed into the attachment element 74, so as to engage by friction the stem 22, fixing the upper flange at the desired height.

The upper flange 70 has in addition a number of seats for skewers 78, made along the peripheral rim of the plate 72 in the form of indentations of the same.

Said completion accessories comprise, in addition, a number of skewers 80, that is of rods to spear in succession pieces of meat or vegetables.

Said skewers 80 have a ring-shaped upper extremity 82, bent into the form of an open ring to give the desired structural flexibility.

Said ring-shaped extremity 82 is suitable for snap-insertion into the respective skewer seat 78.

The skewer 80 is of such a length that the other extremity, that is the lower extremity 84 is inserted in the respective hole 58 of the lower flange 50, even when the upper flange is fixed to the stem 22 at the maximum upper height.

To make a shish kebab, the pieces of meat are put onto the skewers 80 and positioned vertically.

Even if the device 1 has been described with reference to the preparation of a kebab, it is clear that other types of preparation are possible: for instance, fish, vegetables and yet other foods can be prepared.

Preferably, the components of the device are made in steel.

Innovatively, the cooking device described above makes it possible to make a kebab in a traditional domestic oven.

Advantageously, preparation is greatly simplified, in that the device can be extracted from the cooking chamber of the oven for the preparation of the foods to be cooked, for instance on a table or kitchen counter.

According to a further advantageous aspect, the size of the cooking device and of the cooking group is limited, to facilitate use in small ovens too.

Advantageously, in addition, the cooking group rests firmly on the shelf.

According to yet a further advantageous aspect, the device makes it possible to perform such cooking with limited soiling of the cooking chamber, the liquids being appropriately channelled.

It is clear that a person skilled in the art may make modifications to the cooking device described above in order to satisfy specific and contingent requirements, all while remaining within the scope of protection as defined by the appended claims.

## Claims

1. Cooking group (20) for oven,
wherein the oven comprises a cooking chamber and a motor having a power take-off making a motor torque available along a horizontal rotation axis (X), wherein the cooking group comprises:
- a take-off shaft (24) suitable for connecting to the power take-off to be driven in rotation along said horizontal rotation axis (X);
- a stem (22), suitable for being lodged in said cooking chamber of the oven, mechanically connected to said take-off shaft (24) to be driven in rotation;
wherein the stem (22) is connected so as to be driven in rotation around a vertical rotation axis (Z), perpendicular to the horizontal rotation axis (X).

2. Group according to claim 1, comprising a transmission holder box (26) and transmission gears therein contained, said box supporting the take-off shaft (24) and the stem (22).

3. Group according to claim 1 or 2, comprising an oven tray (40) inserted on the stem (22).

4. Group according to claim 3, wherein the oven tray (40) comprises, from the vertical rotation axis (Z) towards the peripheral rim, a connection plate (42), a flared portion (44), flared downwards, and an annular collection portion (46), having a raised rim (48).

5. Group according to claim 3 or 4, comprising, in addition a lower flange (50), fitted onto the stem (22), positioned near the oven tray (40), having a lesser radial dimension than the oven tray (40).

6. Group according to claim 5, wherein the lower flange (50) comprises, from the vertical rotation axis (Z) towards the peripheral rim, a central plate (52), a flared crown (54) and a flat crown (56).

7. Group according to claim 5 or 6, wherein the lower flange (50) comprises a number of holes (58), which surround the vertical rotation axis (Z).

8. Group according to claims 6 and 7, wherein the holes (58) are positioned on the flat crown (56) of the lower flange (50).

9. Group according to any of the claims from 5 to 8, comprising, in addition, an upper flange (70) fitted onto the stem (22) and attached to it in an adjustable manner to maintain the desired height from the lower flange underneath (50).

10. Group according to claim 9, wherein the upper flange (70) has a number of seats for skewers (78), made along the peripheral rim in the form of indentations.

11. Group according to claim 10, comprising a number of skewers (80) positioned between the upper flange (70) and the lower flange (50).

12. Group according to claim 11, wherein the skewers (80) have an upper extremity in the form of an open ring (82) suitable for inserting in the respective skewer seat (78).

13. Cooking device comprising:
- a cooking group made according to any of the previous claims; and
- a shelf (2) comprising a number of rectilinear wires (4), positioned parallel to each other;
wherein said cooking group is inserted between two wires so as to be supported.

14. Device according to claim 13, wherein the cooking group, inserted between two wires, protrudes from the lower side of the shelf.

15. Device according to claim 14, wherein the shelf (2) comprises two primary wires (6,8) spaced at a distance greater than the distance between the other wires (4), between which said cooking group is inserted.

16. Device according to claim 15, wherein the shelf (2) has a curved section (3a') on the transversal rod (3a), between said primary wires (6,8), to support the take-off shaft (24).

17. Device according to claim 15 or 16, wherein the shelf comprises at least one stop (10), between said primary wires (6,8), on the lower side.

18. Device according to claim 17, wherein the shelf comprises supports (5) on the lower side, of greater height than the stops (10).
